# EUROPEAN PATENT APPLICATION

(11) **EP 1 947 839 A2**
(43) Date of publication of application: **23.07.2008**
(21) Application number: 07018605.1
(22) Date of filing: 21.09.2007
(51) Int. Cl.: H04N 5/14

(54) **Video signal processing circuit, video signal processor, and video signal processing method**

(30) Priority: 27.12.2006 JP 2006352242
(71) Applicant: Kabushiki Kaisha Toshiba, Minato-ku, Tokyo 105-8001 (JP)
(72) Inventor: Terada, Munehiro, Minato-ku Tokyo (JP)
(74) Representative: HOFFMANN EITLE

(57) **Abstract**

According to one embodiment of the invention, there is provided a video signal processing circuit including: an image processing circuit configured to subject a video signal to image processing for displaying the video signal on an image display section; and a motion picture enhancement circuit configured to acquire, from the image processing circuit, the video signal and a motion detection information representing whether the video signal corresponds to a motion picture signal or a still picture signal; subject the video signal to double speed conversion processing by a frame interpolation signal generated through a motion compensation prediction if the video signal corresponds to a motion picture signal; and subject the video signal to double speed conversion processing by the video signal if the video signal corresponds to a still picture signal.

## Description

### CROSS-REFERENCE TO RELATED APPLICATIONS

This application is based upon and claims the benefit of priority from Japanese Patent Application No. 2006-352242, filed on December 27, 2006; the entire contents of which are incorporated herein by reference.

### BACKGROUND

### 1. Field

One embodiment of the invention relates to a video signal processing circuit, a video signal processor, and a video signal processing method which enable subjecting of a video signal to double speed conversion processing complying with a motion compensation frame interpolation scheme.

### 2. Description of the Related Art

A set into which a motion picture enhancement technique, such as a double speed conversion processing technique complying with a motion compensation frame interpolation scheme, or the like, is introduced has become prevalent as a TV receiver typified by a liquid-crystal TV (television).

It is disclosed by, for example, JP-A-2002-209191 that the double speed conversion processing technique complying with the motion compensation frame interpolation scheme is a technique for generating a frame interpolation signal from a video signal and a motion vector and subjecting the video signal to double speed conversion processing by the frame interpolation signal.

Incidentally, when the video signal is a motion picture signal, the double speed conversion processing technique complying with the motion compensation frame interpolation scheme is superior in terms of enhancement of image quality. However, there may be a case where the video signal is switched from the motion picture signal to a still picture signal [e.g., a full-screen graphic such as an EPG (Electronic Program Guide), a PC (Personal Computer) image, or the like]. In this case, when the video signal corresponding to the still picture signal is handled as a motion picture signal and the video signal is subjected to double speed conversion processing complying with the motion-compensation frame interpolation scheme, an image may collapse in, particularly, a transitory stage at which the motion picture signal is switched to a still picture signal.

### BRIEF DESCRIPTION OF THE SEVERAL VIEWS OF THE DRAWINGS

A general architecture that implements the various feature of the invention will now be described with reference to the drawings. The drawings and the associated descriptions are provided to illustrate embodiments of the invention and not to limit the scope of the invention.

FIG. 1 is an exemplary block diagram showing the internal configuration of a TV receiver according to an embodiment of the invention; and

FIG. 2 is an exemplary block diagram showing the internal configuration of a motion picture enhancement circuit shown in Fig. 1. according to the first embodiment.

### SUMMARY

According to an aspect of the invention, there is provided a video signal processing circuit including an image processing circuit configured to subject a video signal to image processing for displaying the video signal on an image display section; and a motion picture enhancement circuit configured to acquire, from the image processing circuit, the video signal and a motion detection information representing whether the video signal corresponds to a motion picture signal or a still picture signal; subject the video signal to double speed conversion processing by a frame interpolation signal generated through a motion compensation prediction if the video signal corresponds to a motion picture signal; and subject the video signal to double speed conversion processing by the video signal if the video signal corresponds to a still picture signal.

According to another aspect of the invention, there is provide a video signal processing method including: subjecting a video signal to image processing for displaying the video signal on an image display section; acquiring the video signal and motion detection information showing whether the video signal corresponds to a motion picture signal or a still picture signal; subjecting the video signal to double speed conversion processing by a frame interpolation signal generated through motion compensation prediction if the video signal corresponds to a motion picture signal; and subjecting the video signal to double speed conversion processing by the video signal if the video signal corresponds to a still picture signal.

### DETAILED DESCRIPTION

Various embodiments according to the invention will be described hereinafter with reference to the accompanying drawings. In general, according to one embodiment of the invention, there is provided a video signal processing circuit including: an image processing circuit configured to subject a video signal to image processing for displaying the video signal on an image display section; and a motion picture enhancement circuit configured to acquire, from the image processing circuit, the video signal and a motion detection information representing whether the video signal corresponds to a motion picture signal or a still picture signal; subject the video signal to double speed conversion processing by a frame interpolation signal generated through a motion compensation prediction if the video signal corresponds to a motion picture signal; and subject the video signal to double speed conversion processing by the video signal if the video signal corresponds to a still picture signal.

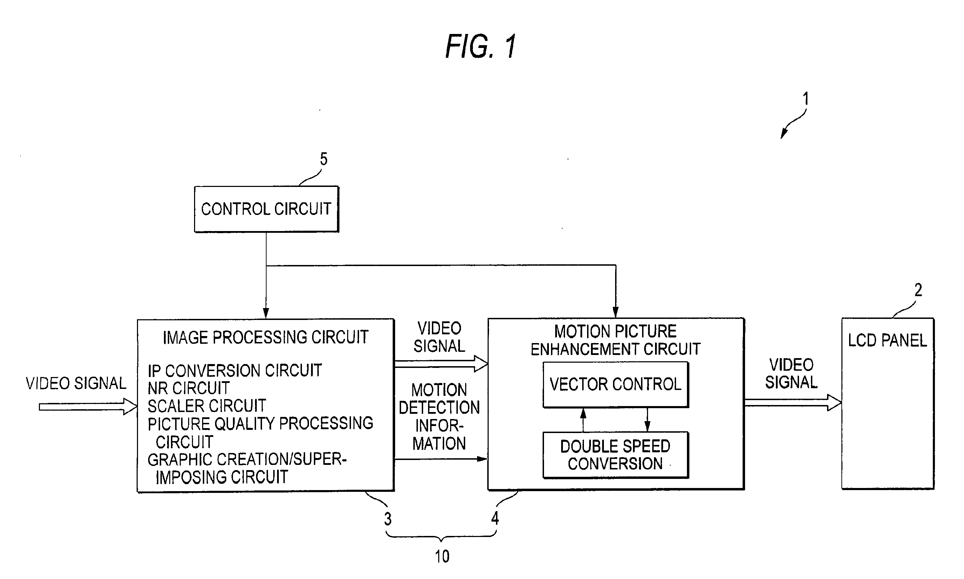

According to an embodiment, FIG.1 shows a TV receiver (a video signal processor) 1. The TV receiver (a video signal processor) 1 has an LCD (Liquid-Crystal Display) panel (an image display section 2; an image processing circuit 3; a motion picture enhancement circuit 4; and a control circuit 5. An input video signal is converted into a format suitable for the LCD panel 2 by the image processing circuit 3 and the motion picture enhancement circuit 4, and the thus-converted signal is displayed on the LCD panel 2. A video signal processing circuit 10 is configured by the image processing circuit 3 and the motion picture enhancement circuit 4.

The image processing circuit 3 subjects the video signal to image processing for displaying the video signal on the LCD panel 2, and outputs the video signal processed by the image processing. Specifically, the image processing circuit 3 has an IP conversion circuit for converting a video signal of an interlace scheme into a video signal of a progressive scheme; an NR circuit for diminishing noise in an image; a scaler circuit for resizing an image to a size at which the image can be displayed on the LCD panel 2; an image quality processing circuit for adjusting image quality; and a graphic creation/superimposing circuit for creating a graphic and superimposing the thus-created graphic on a motion picture.

The image processing circuit 3 outputs motion detection information showing whether the video signal is a motion picture signal or a still picture signal. Motion detection information corresponds to, e.g., 1-bit data set by the control circuit 5, and is generated from a result of detection of a motion picture performed by the image processing circuit 3.

The motion picture enhancement circuit 4 acquires a video signal and motion detection information which have been output from the image processing circuit 3. When the motion detection information shows that the video signal corresponds to a motion picture signal, the motion picture enhancement circuit 4 subjects the video signal to double speed conversion processing by the frame interpolation signal generated through motion compensation prediction (i.e., by activating vector control processing). Meanwhile, when the motion detection information shows that the video signal corresponds to a still picture signal, the motion picture enhancement circuit 4 subjects the video signal to double speed conversion processing by the video signal (i.e., by deactivating vector control processing). Specifically, when the video signal is a still picture signal, the motion picture enhancement circuit 4 subjects the video signal to simple double speed conversion processing.

The term "motion compensation prediction" is inter-frame prediction. Specifically, an image of interest and a preceding image are divided into macro blocks (e.g., blocks consisting of 16 pixels and 16 lines). There is prepared a motion vector showing the moving direction and the amount of movement of corresponding blocks between the image of interest and the preceding image. The image of interest is predicted from the preceding image in accordance with the motion vector. Further, the term "frame interpolation signal" means a signal generated from a video signal through inter-frame prediction.

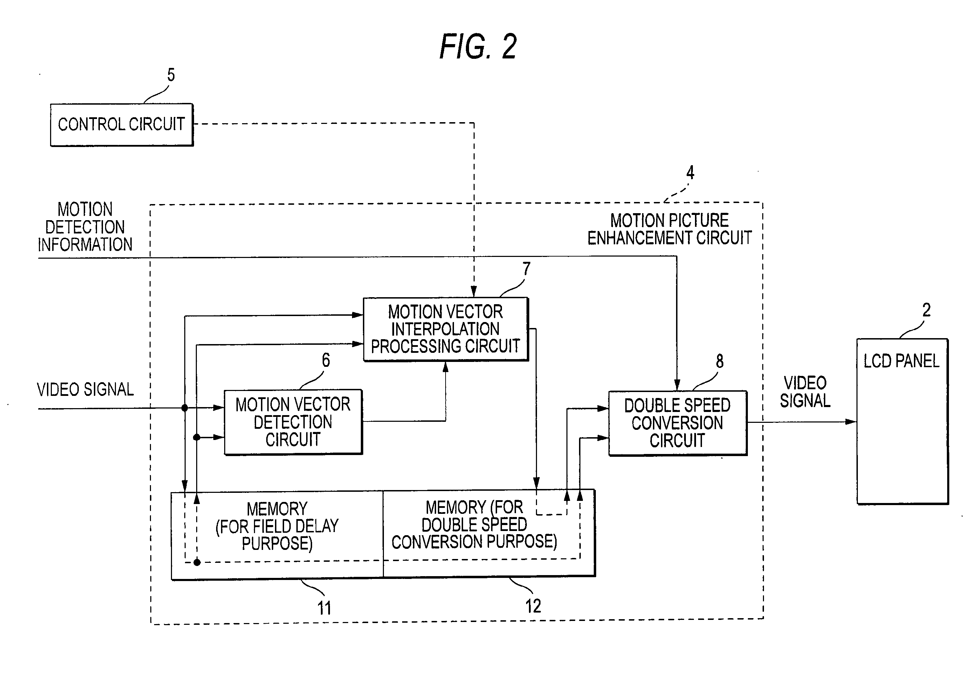

As shown in Fig. 2, the motion picture enhancement circuit 4 has a motion vector detection circuit 6 for detecting a motion vector from a video signal; a motion vector interpolation processing circuit 7 for generating a frame interpolation signal from the video signal and the motion vector; a double speed conversion circuit 8 for subjecting the video signal to double speed conversion processing; memory 11 for a field delay purpose (hereinafter called "field delay memory"); and memory 12 for a double speed conversion purpose (hereinafter called "double speed conversion memory") .

The video signal output from the image processing circuit 3 is divided into a video signal of a current field and a video signal which has undergone a field delay by the memory 11.' The thus-divided video signals are input to the motion vector detection circuit 6. In accordance with a result of determination of a field difference, the motion vector detection circuit 6 detects a motion vector and outputs a result of detection to the motion vector interpolation processing circuit 7.

A detection result of the motion vector output by the motion vector detection circuit 6 is input to the motion vector interpolation processing circuit 7. The video signal of the current field and the video signal having undergone a field delay by the memory 11 are also input to the motion vector interpolation processing circuit 7. The motion vector interpolation processing circuit 7 performs interpolation processing by the video signal of the current field and the field-delayed video signal and by the detection result of the motion vector, to thus generate a frame interpolation signal; and outputs the thus-generated frame interpolation signal to the memory 12.

The frame interpolation signal having passed through the memory 12 is input to the double speed conversion circuit 8. The video signal having passed through the pieces of memory 11, 12 and the motion detection information output by the image processing circuit 3 are also input to the double speed conversion circuit 8. When the motion detection information shows that the video signal is a motion picture signal, the double speed conversion circuit 8 subjects the video signal having passed through the pieces of memory 11 and 12 to double speed conversion processing by the frame interpolation signal that has been generated by the motion vector interpolation processing circuit 7 and passed through the memory 12. Meanwhile, when the motion detection information shows that the video signal is a still picture signal, the double speed conversion circuit 8 subjects the video signal to double speed conversion processing by the video signal having passed through the pieces of memory 11, 12 and without use of the frame interpolation signal that has been generated by the motion vector interpolation processing circuit 7 and passed through the memory 12. When the vertical frequency of the input video signal is 50 Hz, the frequency is converted to 100 Hz through double speed conversion. In the case of a frequency of 60 Hz, the frequency is converted to 120 Hz. Thus, the video signal is displayed on the LCD panel 2.

As has been described above, the motion picture enhancement circuit 4 acquires the video signal output by the image processing circuit 3 and the motion detection information. When the video signal corresponds to a motion picture signal, the video signal is subjected to double speed conversion processing by the frame interpolation signal generated through motion compensation prediction. In the meantime, when the video signal corresponds to a still picture signal, the video signal is subjected to double speed conversion processing by the video signal and without use of the frame interpolation signal. Thus, the video signal corresponding to a still picture signal is handled as a motion picture signal, thereby preventing subjecting of the video signal to double speed conversion processing complying with a motion compensation frame interpolation scheme. Accordingly, there is prevented occurrence of, e.g., a situation where an image collapses in a transient phase during which a motion picture signal is switched to a still picture signal. Therefore, the TV receiver 1 can readily realize a setting of superior image quality by the motion detection information output by the image processing circuit 3.

The present invention is not limited to the above-described embodiment.

For instance, the motion detection information output by the image processing circuit 3 may also be input to the motion vector interpolation processing circuit 7. At this time, when the motion detection information shows that the video signal corresponds to a motion picture signal, the motion vector interpolation circuit 7 generates a frame interpolation signal from the video signal and a motion vector, and outputs the thus-generated frame interpolation signal. In contrast, when the motion detection information shows that the video signal corresponds to a still picture signal, the video signal is output. The double speed conversion circuit 8 subjects the video signal having passed through the pieces of memory 11 and 12 to double speed conversion processing, by the frame interpolation signal or the video signal that has been output by the motion vector interpolation processing circuit 7 and has passed through the memory 12.

The video signal corresponding to the still picture signal is handled as a motion picture signal even by such processing, thereby preventing subjecting of the video signal to double speed conversion processing complying with a motion compensation frame interpolation scheme. Consequently, the TV receiver 1 enables easy setting of superior image quality.

The above-described embodiment enables easy setting of superior image quality. While certain embodiments of the inventions have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the aspect of the inventions. The accompanying claims and their equivalents are intended to cover such forms or modifications as would fall within the scope and spirit of the inventions.

## Claims

1. A video signal processing circuit comprising:
an image processing circuit configured to subject a video signal to image processing for displaying the video signal on an image display section; and
a motion picture enhancement circuit configured to acquire, from the image processing circuit, the video signal and a motion detection information representing whether the video signal corresponds to a motion picture signal or a still picture signal; subject the video signal to double speed conversion processing by a frame interpolation signal generated through a motion compensation prediction if the video signal corresponds to a motion picture signal; and subject the video signal to double speed conversion processing by the video signal if the video signal corresponds to a still picture signal.

2. The video signal processing circuit according to claim 1, wherein the motion picture enhancement circuit includes:
a motion vector detection circuit configured to detect a motion vector in accordance with the video signal;
a motion vector interpolation processing circuit configured to generate the frame interpolation signal from the video signal and the motion vector; and
a double speed conversion circuit configured to subject the video signal to double speed conversion processing.

3. The video signal processing circuit according to claim 2, wherein the motion detection information is acquired by the double speed conversion circuit,
wherein the double speed conversion circuit subjects the video signal to double speed conversion processing by the frame interpolation signal generated by the motion vector interpolation processing circuit if the video signal corresponds to a motion picture signal, and
wherein the double speed conversion circuit subjects the video signal to double speed conversion processing without the frame interpolation signal generated by the motion vector interpolation processing circuit and by the video signal if the video signal corresponds to a still picture signal.

4. The video signal processing circuit according to claim 2, wherein the motion detection information is acquired by the motion vector interpolation processing circuit,
wherein the motion vector interpolation processing circuit outputs the video signal if the video signal corresponds to a still picture signal, and
wherein the double speed conversion circuit subjects the video signal to double speed conversion processing by the video signal.

5. The video signal processing circuit according to claim 2, wherein the motion detection information is acquired by the motion vector interpolation processing circuit,
wherein the motion vector interpolation processing circuit generates the frame interpolation signal from the video signal and the motion vector and outputs the generated frame interpolation signal if the video signal corresponds to a motion picture signal, and
wherein the double speed conversion circuit subjects the video signal to double speed conversion processing by the frame interpolation signal output from the motion vector interpolation processing circuit.

6. A video signal processing method comprising:
subjecting a video signal to image processing for displaying the video signal on an image display section;
acquiring the video signal and motion detection information showing whether the video signal corresponds to a motion picture signal or a still picture signal;
subjecting the video signal to double speed conversion processing by a frame interpolation signal generated through motion compensation prediction if the video signal corresponds to a motion picture signal; and
subjecting the video signal to double speed conversion processing by the video signal if the video signal corresponds to a still picture signal.
